# EUROPEAN PATENT SPECIFICATION

(11) **EP 2 700 813 B1**
(45) Date of publication and mention of the grant of the patent: **23.12.2015**
(21) Application number: 12460095.8
(22) Date of filing: 27.12.2012
(51) Int. Cl.: F03D 3/06

(54) **Wind turbine with vertical rotation axis**
Windturbine mit vertikaler Rotationsache
Éolienne à axe de rotation vertical

(30) Priority: 25.08.2012 PL 40051212
(43) Date of publication of application: 26.02.2014
(73) Proprietor: Meprozet Stare Kurowo Spólka z o.o., 66-540 Stare Kurowo (PL)
(72) Inventor: Koltuniewicz, Piotr, 37-200 Przeworsk (PL)
(74) Representative: Stachowski, Andrzej

(56) References cited:
- EP-A1- 0 276 904
- WO-A1-85/01780
- GB-A- 1 486 338
- US-A- 1 618 549

## Description

The subject of this invention is a wind power station with a carousel rotor, i.e. a rotor with a vertical rotation axis and planetary rotating blades, fitted with a mechanism to prevent the rotor to exceed the maximum allowable speed and thus prevent damage due to the wind.

Wind power stations with a vertical axis rotor installed upon its support, and a generator connected via a kinematic coupling, have been used for power generation for years now. Such a wind power station with carousel rotor installed atop a tubular mast is shown for example in Polish patent application No. P.388698.

Rotors with vertical rotation axis and planetary (carousel) blade motion are shown in the patent specifications, e.g. PL 150739, PL 172666, EP 0276904, US 4424002, US 7665966 and international patent application WO 2005/100785 as well.

Carousel rotors utilized in the known designs are fitted with a horizontal drive structure supported by bearings installed at the axis of symmetry, coaxial with vertical rotation axis, and are coupled to the drive shaft or drive axle. Depending on the number of blades installed, the drive structure is of two-, multi-arm, or disc design.

Blades of known rotor designs are supported by bearings installed over vertical pins at the free ends of the drive structure and coupled with a central wheel or a central wheel set (where wheels in said set are immovable in relation to each other) via position gearing, usually by chain gears, of 1:2 ratio. The central wheel or the wheel set are installed coaxial with the rotor rotation axis with their angular position in relation to the drive arms determined by the mechanism which sets the rotor toward the wind.

In some of the known solutions, the blades of carousel rotors are supported by bearings seated in the drive structure arms at bottom pins. In other designs, blades are supported on both sides (on both bottom and upper pins) seated in the drive structure and in the frame or in the fixing structure installed over the drive structure.

As the blades are coupled with central wheel or wheel set by positron gear of 1:2 ratio, the blades rotate at half the speed of the drive structure, in the direction opposite the rotation to the drive structure, and they assume the required position in relation to the direction of the wind. The blade cord which at the characteristic points on the perpendicular axis are tangential to it at the concurrent side and perpendicular at the retreating side.

The principle of the operation of the carousel rotor requires that both sides of the blade be of identical form at the position of receiving the wind pressure. These surfaces are brought into operation alternately, one at every second turn of the rotor. Thus the known blades are made symmetrical against their principal plane, i.e. the plane that goes through the axis of the rotation of the blade and the longitudinal axis of the traverse cross-section of the blade. They are typically constructed flat with principal surfaces parallel to each other or converging on both sides from the pin axis towards the blade edges on both sides.

As it is commonly known, the operation of any wind turbines in stormy weather or unstable wind with hurricane gusts may lead to its damage mainly due to exceeded allowable rotation speeds. To prevent this, a number of wind rotors with horizontal rotation axis are fitted with mechanisms that prevent the rotor against exceeding allowable speed. On the other hand, such arrangements are not used for the rotors with vertical axis of rotation except for Savonius rotors.

Both the monograph Silownie wiatrowe by A. Flaga, published by the Krakow University of Technology, Kraków, Poland 2012 (pp.164-165) and the specification of Polish utility model application No. PL 118785 (U1) reference the Savonius wind turbine fitted with a set of swing-out deflectors arranged at the external edges of fixed blades and linked with electric actuators. At weaker winds, the deflectors are set open, but when the wind increases, the actuators reset the deflectors around the perimeter of the turbine and assume a form of a circle.

Another manner of protecting the Savonius wind turbine against the damage due to the wind is known from the specification of Polish utility model application No. PL 102122 (U1). In to this solution, on the outer surface of the Savonius rotor a control ring is mounted separately, sliding vertically to reduce the active or area of the rotor exposed to the wind impact.

No information, however, was found either in professional publications or patents, as to solutions that prevent the carousel rotors against damage due to excessive wind.

In the present invention, a wind power station with a carousel rotor with vertical rotation axis, fitted with supporting structure and a generator driven by the rotor installed upon the supporting structure, with the rotor equipped with a three-arm driving structure located at the bottom, situated on a bearing in the symmetrical centre of the vertical rotation axis, coupled with a generator via a kinematic gearing, and containing three identical blades whose lower pins are situated in bearings located at the ends of drive arms at equal angles and the upper pins are seated in bearings located at the ends of arms of a three-arm fixing structure installed over the driving structure and situated on a bearing in the symmetrical centre of the vertical rotation axis of rotor structure, and blades are connected through position gears of 1:2 ratio to the set of central gear wheels, which is fixed coaxial with the rotor rotation axis and whose angular position in relation to the drive structure arms sets the mechanisms of setting the rotor to the direction of the wind, characterized by the fact that each of the central-set wheels of its rotor is fitted with one sleeve, and the sleeves are rotary in relation to each other and to the supporting structure, and each sleeve has cam grooves situated at the opposing sides of the slide surfaces, through which a pin, common to all sleeves, crosses radially, to determining the angular position of the sleeves in relation to each other, as well as the angular position of the set of sleeves in relation to the supporting structure, wherein the grooves of the first sleeve of the first central wheel are axial in relation to the axis of the rotor rotation, the grooves in the second sleeve of the second central wheel are set oblique left or right hand in relation to the axis of the rotation of the rotor and the grooves in the third sleeve of the third central wheel are set oblique in the opposite direction to that of the grooves of the second sleeve, and that the pin is fixed on a push-rod which is connected to at least one actuator, and the actuator is fixed on the supporting structure and via the push-rod drives the pin axially in the grooves of the set of sleeves, maintaining the angular position of the pin and forcing a relative rotation of the second and third sleeves in relation to the first sleeve while maintaining the angular position of the first sleeve in relation to the supporting structure.

The inclination of these grooves as well as their length as chosen in such a manner that once the push-rod moves the pin from one end of a grooves to the other, the second and third sleeves with their corresponding central wheels, i.e. the second and the third ones, through position gears force the change in the mutual angular position location of the two rotor blades in relation to the blade remaining in the previous position, from the power generating to idle (neutral) position, in which due to wind action the blades assume vane (feathering) position and cause the rotor to cease rotating.

The actuator is controlled according to rotor rotation, e.g. mechanically or electrically. It is understandable, however, that the specific method of controlling the actuator exceeds the scope of the present invention.

In the invention, a bi-stable actuator, e.g. electromagnetic actuator can be used for changing the relative angular position in the central wheel set, which would allow for rapid repositioning of the rotor blades from one extreme position to the other, i.e. from the power-generating to the idle position, or vice versa.

Further development of this invention could include the application of the linear-action actuator, e.g. linear screw drive, which would allow for smooth rotor speed adjustment by gradually increasing or decreasing the effective surface of the blades.

This present invention can be applied for driving wind turbines (wind power stations) with carousel-design rotor (i.e. a rotor with a vertical axis of rotation and planetary motion of the blades) in virtually any weather conditions, even strong winds with hurricane gusts as well as winds with changing direction. This solution allows the blades of the turbine to be set toward the wind and protects the rotor against exceeding the maximum allowable speed in strong wind, which might damage the turbine.

The present invention is illustrated by the description of a sample construction of a wind turbine (wind power station), illustrated in the attached drawing wherein:

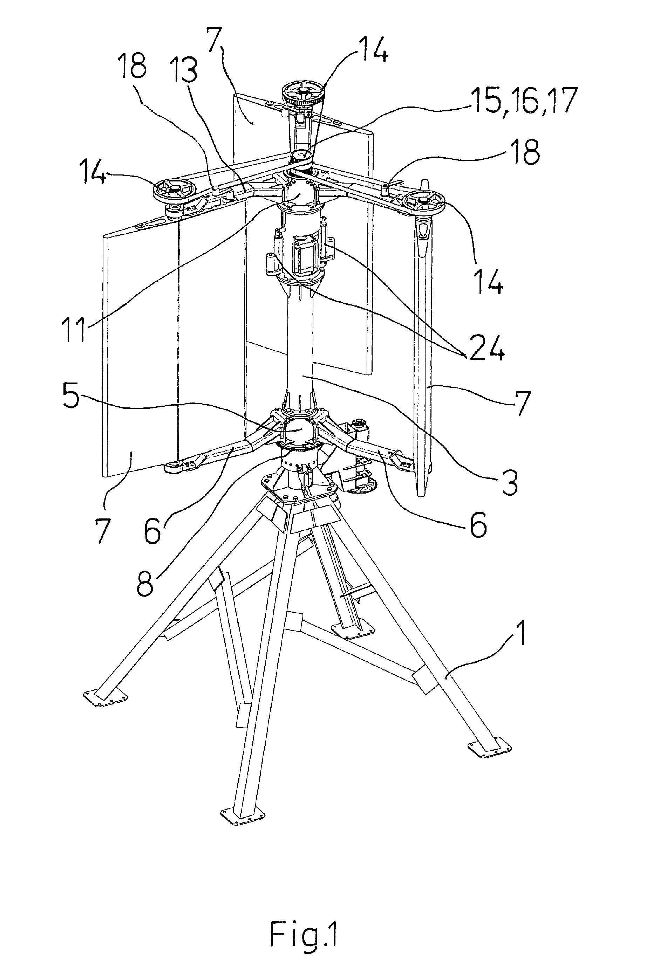

- Fig.1: shows an isometric view of a typical wind power station with lattice support and carousel rotor;
- Fig.2 -: kinematic diagram of the wind power station;

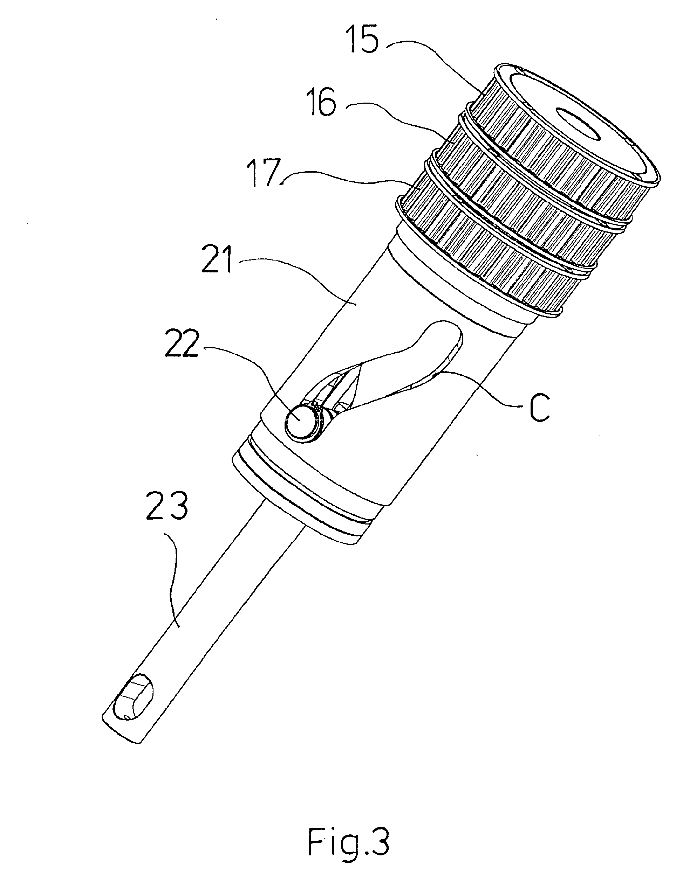

- Fig.3 -: isometric view of the central gear wheel set with respective sleeves and a push-rod with a locating pin running along the cam grooves;
- Fig.4 -: axial cross-section through the hub of the driving structure when the pin is set in the cam grooves for power-generating configuration of the turbine blades;
- Fig.5 -: axial cross-section through the hub of the driving structure when the locating pin is set in the cam grooves for idle configuration of the turbine blades;
- Fig.6 -: schematic view from the top of the fixing structure and the blades in the power-generating configuration of the turbine;
- Fig.7 -: schematic view from the top of the fixing structure and the blades in the idle configuration of the turbine.

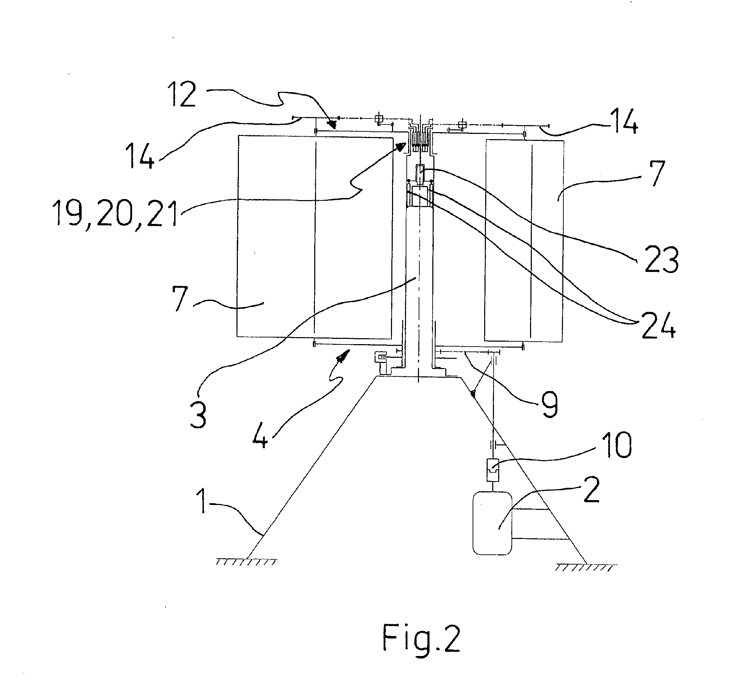

In the sample construction, the wind power station is installed on a lattice supporting structure with base 1 to which are fixed: a generator 2 (shown in Fig. 2 only for the sake of clarity) and a tubular mast 3, constituting the element on which the carousel rotor of the turbine is set on rotational bearings.

On the bottom of the rotor, a three-arm driving structure 4 is located, which a hub 5 is rotary installed on the mast 3. From the hub 5, three identical drive arms 6 are placed radially at 120°. At the free ends of the arms 6, a bearing seats are located in which the lower pins of the rotor blades 7 are installed.

Moreover, below the hub 5, a toothed gear 8 coupled with the hub 5 is located to which a power generator 2 is linked via a chain gear 9 and a coupling 10.

In the top part of the mast 3 a second rotating hub 11 of the three-arm fixing structure 12 is installed. The fixing structure 12 is fitted with arms 13 distributed above the arms 6 of the driving structure 4 at equal angles.

At the ends of the arms 13 of the fixing structure 12, a set of complementary bearings are fitted, in which the upper pins of the blades 7 are set on bearings. The upper pins of the blades 7 protrude from the complementary bearings of the arms 13 of the fixing structure 12, clear, and on ends of those pins, planet gear wheels 14, toothed belt transmissions with 1:2 ratio are fitted, which make the blades 7 rotate in the planetary manner during the rotation of the rotor, while a rims of three toothed central gear wheels 15, 16 and 17 protruding beyond the edge of the second hub 11 so as to couple them with the corresponding planetary gears 14 via tooth belts. Moreover, in order to ensure the proper operation of the toothed belt transmissions mentioned above, on the arms 13 of the fixing structure12, known belt tension rollers 18 are installed, and the central gear wheels 15, 16 and 17 are fitted with discs to prevent the belts from sliding off.

The blades 7 are in the form of rectangles with strongly flattened-diamond cross-section, with the pins of the blades 7 located in such a manner that the axes of rotation of the blades 7 cross the centers of gravity of their cross-section.

The set of three central gear wheels 15, 16, 17, which extends above the second hub 11, is set rotationally inside the tube of the mast 3 via sleeves 19, 20, 21, and each of the central gear wheels 15, 16, 17 corresponding to one of the sleeves 19, 20, 21.

Sleeves 19, 20, 21 are positioned coaxially and set rotary in relation to each other as well as the mast 3 of the supporting structure.

Each of the sleeves 19, 20, 21 has two cam grooves A, B, C situated on the opposite sides of their slide surfaces, coupled by the locating pin 22, common for the sleeves 19, 20, 21 and aligned radially, which determines the angular positions of the sleeves 19, 20, 21 in relation to each other and the angular position of the set of sleeves 19, 20, 21 in relation to the mast 3 of the supporting structure.

In order to reduce the resistance associated with the motion of the pin 22 trough the cam grooves A, B, C, in the example presented, it is fitted with ball bushings.

In the example presented, the grooves A of the first sleeve 19 of the first central wheel 15 (i.e. the one closest to the axis of the rotor rotation) run parallel to the axis, the grooves B of the second sleeve 20 of the second central wheel 16 run oblique to the left with respect to the axis of the rotor rotation, and the grooves C of the third, external sleeve 21 of the third central wheel 17 run oblique to the right with respect to the axis of the rotor rotation.

The pin 22 is fixed on the push-rod 23 which determines its angular position in relation to the mast 3.

As a result of a such coupling of the elements mentioned above, the pin 22 determines the angular position of the sleeves 19, 20 and 21 with respect one to another and the angular position of the set of sleeves 19, 20, 21 with respect to the mast 3, which results in technical terms in the fact that the three central wheels 15, 16 and 17 are fixed in specified relation (position) one to another and the set of central wheels 15, 16, 17 is fixed in specified relation (position) with respect to the mast 3 of the supporting structure.

In the example presented, the push-rod 23 is coupled with a pair of actuators 24, which are attached to the mast 3 of the supporting structure and which drive axially the push-rod 23. Actuators 24 via the push-rod 23 move axially the pin 22 along the cam grooves A, B, C of the set of sleeves 19, 20, 21, maintaining the angular position of the pin 22 and forcing the motion of both the second 20 and third 21 sleeve to rotate in relation to the first sleeve 19 while maintaining the angular position of the first sleeve 19 with respect to the mast 3 of the supporting structure.

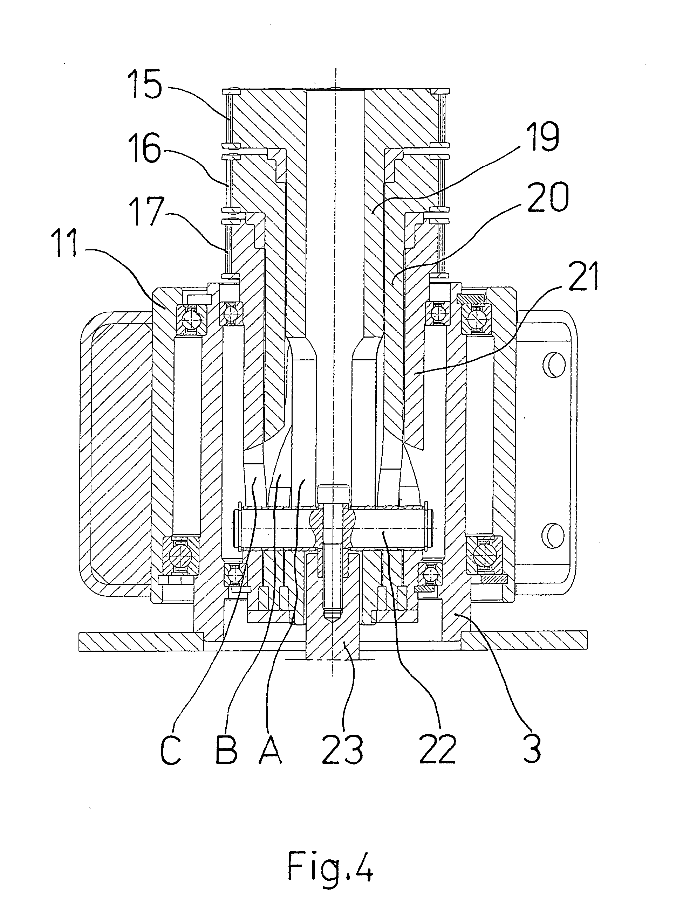

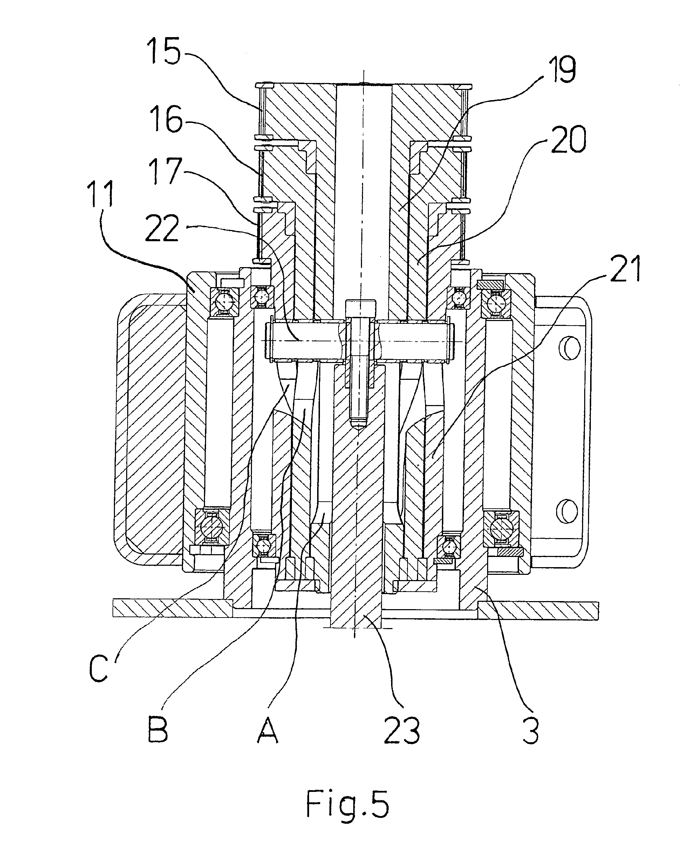

In this example, the actuators 24 are controlled electrically with respect to the rotor rotation (by terminal voltage at the generator) and once the speed increases or decreases (the terminal voltage increases or decreases) they force the axial motion of the push-rod 23 and the pin 22 up or down (see Fig. 4 and 5).

The axial motion of the push-rod 23 moving the pin 22 along the cam grooves A, B, C of the set of sleeves 19, 20, 21 and forces a relative rotating motion of the second 20 and third sleeve 21 with respect to the first one 19.

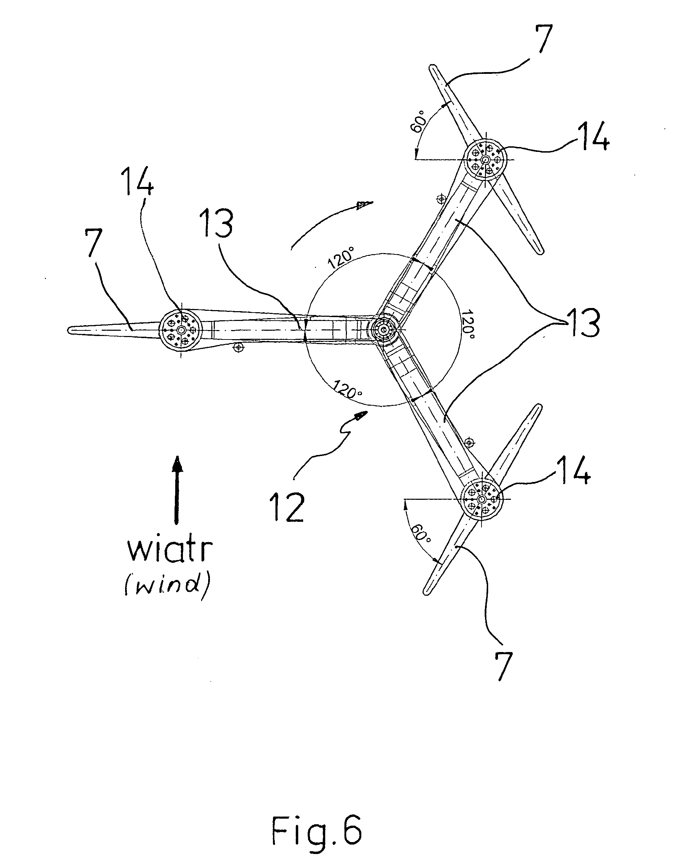

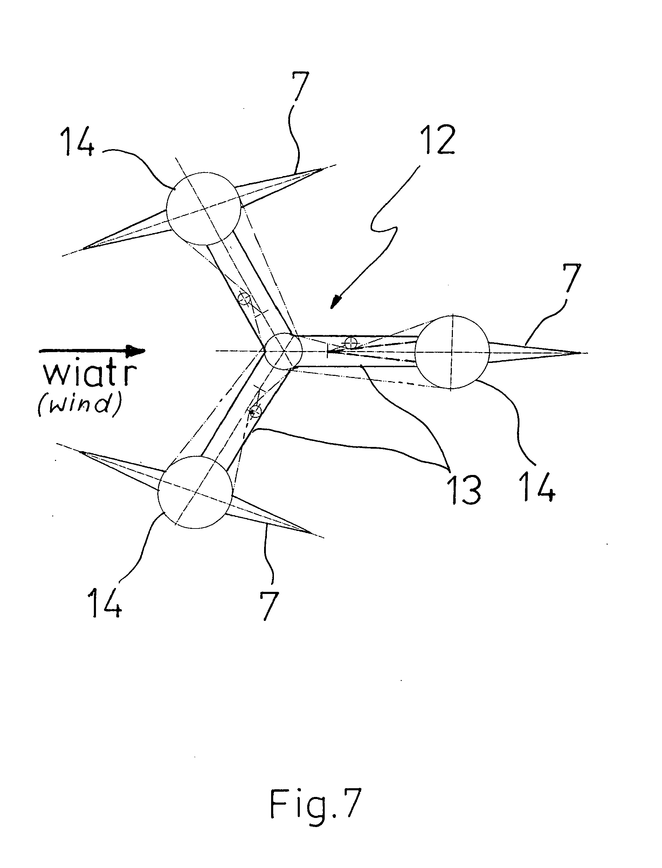

The inclination and the length of the cam grooves A, B, C are selected in such a manner that, once the push-rod 23 moves the pin 22 from its lower extreme position (lower groove end) to its upper extreme position (upper groove end), the sleeves 20 an 21 with the corresponding second 16 and third 17 central wheels, force the two rotor blades, via the position gears (tooth belt transmissions), to change the relative angular position of the second and third rotor blades 7 in relation to the first one, whose position has not changed, by repositioning rotor blades 7 from power-generating (see Fig.6) to idle (neutral) position, in which the rotor blades 7, as a result of the wind pressure, adopt the vane (feathering) configuration and stop the rotor (see Fig. 7).

It is thus understandable that in the power-generating position, the rotor blades 7 are so set with respect to each other in such a manner that when the principal plane of e.g. the first blade is aligned with the rotor rotation axis, the principal planes of the two other blades 7 are inclined symmetrically at 60° with respect to the principal plane placed in the rotation axis. On the other hand, in the idle (neutral) position, when the rotor blades act as a vane, when the principal plane of the first blade is aligned with rotor axis, then the principal planes of the other blades will be inclined towards each other symmetrically at the angle less than 60° with respect to the principal plane placed in the rotation axis. Moreover, their line of intersection will be situated further from the axis of rotation than the external edge of the first blade 7.

In the presented example, actuators 24 in a form of bi-stable electromagnetic actuators were used for repositioning of the push-rod 23 together with the pin 22.

For experts, it is evident and understandable that in further developments of the invention, actuators 24 with continuous action can be used, e.g. screw drive linear actuators, which would allow not only to change the position of the rotor blades 7 from power-generating to idle position, but also to gradually decrease the rotor speed by gradually limiting the active area of the rotor blades 7.

It is also understandable that in order to protect the rotor against the damage due to exceeding allowable speed, the actuators 24 need to be controlled in any manner with respect to the rotor speed. However, it is obvious that solving the problem of such control falls beyond the scope of the present invention.

## Claims

1. A wind power station with a carousel rotor with vertical rotation axis, fitted with supporting structure and a generator driven by the rotor installed upon the supporting structure, with the rotor equipped with a three-arm driving structure located at the bottom, situated on a bearing in the symmetrical centre of the vertical rotation axis, coupled with a generator via a kinematic gearing, and containing three identical blades whose lower pins are situated in bearings located at the ends of drive arms at equal angles and the upper pins are seated in bearings located at the ends of arms of a three-arm fixing structure installed over the driving structure and situated on a bearing in the symmetrical centre of the vertical rotation axis of rotor structure, and blades are connected through position gears of 1:2 ratio to the set of central gear wheels, which is fixed coaxial with the rotor rotation axis and whose angular position in relation to the drive structure arms sets the mechanisms of setting the rotor to the direction of the wind, **characterized by** the fact that each of the central-set gear wheels (15), (16), (17) of its rotor is fitted with one sleeve (19), (20), (21), and the sleeves (19), (20), (21) are rotary in relation to each other and are rotary in relation to the supporting structure, and each sleeve (19), (20), (21) has cam grooves (A), (B), (C) situated at the opposing sides of the slide surfaces, through which a pin (22), common to all sleeves (19), (20), (21), crosses radially, to determining the angular position of the sleeves (19), (20), (21) in relation to each other as well as the angular position of the set of sleeves (19), (20), (21) in relation to the supporting structure, wherein the grooves (A) of the first sleeve (19) of the first central wheel (15) are axial in relation to the axis of the rotor rotation, the grooves (B) in the second sleeve (20) of the second central wheel (16) are set oblique left or right hand in relation to the axis of the rotation of the rotor and the grooves (C) in the third sleeve (21) of the third central wheel (17) are set oblique in the opposite direction to that of the grooves (B) of the second sleeve (20), and that the pin (22) is fixed on a push-rod (23) which is connected to at least one actuator (24), and the actuator (24) is fixed on the supporting structure and via push-rod (23) drives the pin (22) axially in the grooves (A), (B), (C) of the set of sleeves (19), (20), (21), maintaining the angular position of the pin (22) and forcing a relative rotation of the second (20) and third (21) sleeves in relation to the first sleeve (19) while maintaining the angular position of the first sleeve (19) in relation to the supporting structure.

2. A wind power station according to claim 1, **characterized by** the fact that the push-rod (23) moves the pin (22) from one end of the cam grooves (A), (B), (C) to the other, forces the rotation of the second sleeve (20) corresponding to the second central wheel (16) and the third sleeve (21) corresponding to the third central wheel (17) in such a manner that position gears change the angular position of two rotor blades (7) with respect one the blade (7), which remains in the previous position, from the power-generating to the idle position, in which all blades (7) due to the wind pressure assume the vane configuration.

3. A wind power station according to claim 1, **characterized by** the fact the actuator (24) is controlled according to the rotor speed.

4. A wind power station according to claim 1, **characterized by** the fact that the actuator (24) is of electromagnetic type.

5. A wind power station according to claim 1, **characterized by** the fact that the actuator (24) is of linear screw drive type.

## Patentansprüche

1. Eine Windkraftanlage mit einem Karussell-Rotor mit vertikaler Drehachse, versehen mit einer Tragkonstruktion und einem Generator, angetrieben durch den über der Trägerstruktur installierten Rotor, wobei der Rotor ausgestattet ist mit einer dreiarmigen, an der Unterseite angebrachten Antriebsstruktur, angebracht auf einem Lager in der symmetrischen Mitte der vertikalen Drehachse, verbunden mit einem über ein kinematisches Getriebe gekoppelten Generator und drei identische Blätter enthaltend, deren unteren Stifte in Lagern an den Enden der Antriebsarme in gleichen Winkeln angeordnet und die oberen Stifte an den Enden der Arme eines dreiarmigen Befestigungsstruktur angeordnet sind, installiert über die Antriebsstruktur und angebracht auf einem Lager in der symmetrischen Mitte der vertikalen Drehachse der Rotorstruktur, wobei die Blätter in einem Verhältnis von 1 : 2 mit einem System der zentralen Zahnräder verbunden ist, welches koaxial mit der Rotordrehachse verbunden ist und dessen Winkellage in Bezug auf die Arme der Antriebsstruktur die Mechanismen zum Einstellen des Rotors in die Richtung des Windes bestimmt, **dadurch gekennzeichnet, dass** jedes der zentralen Zahnräder (15), (16), (17) seines Rotors mit einer Muffe (19), (20), (21) angebracht ist und die Muffen (19), (20), (21) in einem rotierenden Verhältnis zueinander und einem rotierenden Verhältnis zur Tragkonstruktion stehen, wobei jede Muffe (19), (20), (21) Nockennuten (A), (B), (C) an den gegenüberliegenden Seiten der Gleitflächen aufweist, durch welche ein Stift (22), geeignet für alle Muffen (19), (20), (21), radial hindurchführt, um die Winkelposition der Muffen (19), (20), (21) in Bezug zueinander wie auch die Winkelposition des Satzes der Muffen (19), (20), (21) in Bezug auf die Stützstruktur zu bestimmen, wobei sich die Nuten (A) der ersten Hülse (19) des ersten Zentralrades (15) axial zur Achse der Rotordrehung befinden, die Nuten (B) in der zweiten Hülse (20) des zweiten Zentralrades (16) schräg nach links oder rechts zur Achse der Drehung des Rotors gesetzt sind und die Nuten (C) in der dritten Hülse (21) des dritten Zentralrades (17) schräg in die entgegengesetzte Richtung zu jener Nut (B) der zweiten Hülse (20) eingestellt ist, und dass der Stift (22) an einer Schubstange (23) befestigt ist, die mindestens mit einem Aktuator (24) verbunden ist, und dieser Aktuator (24) auf der Tragstruktur angebracht ist und über die Schubstange (23) den Stift (22) in den Nuten (A), (B), (C) des Satzes von Muffen (19), (20), (21) axial antreibt, wobei die Winkelposition des Stifts (22) beibehalten wird und eine relative Drehung der zweiten (20) und dritten (21) Muffe zur ersten Muffe (19) bewirkt unter Beibehaltung der Winkelposition der ersten Hülse (19) zur Tragkonstruktion erhalten bleibt.

2. Eine Windkraftanlage nach Anspruch 1, **dadurch gekennzeichnet, dass** die Schubstange (23) den Stift (22) von einem Ende der Nockenrillen (A), (B), (C) auf das andere bewegt, die Drehung der zweiten Hülse (20) entsprechend dem zweiten Zentralrad (16) und der dritte Hülse (21) entsprechend dem dritten Zentralrad (17) in einer solchen Weise bewirkt, dass die Positionsgetriebe von zwei Rotorblättern (7) gegenüber einem Blatt die Winkelposition wechselt, die in der vorherigen Position bleibt, von der Energieerzeugung in der Leerlaufstellung verbleibt, in welcher alle Blätter (7) durch den Winddruck die Propellerflügel übernehmen.

3. Eine Windkraftanlage nach Anspruch 1, **dadurch gekennzeichnet, dass** der Aktuator (24) entsprechend der Rotordrehzahl gesteuert wird.

4. Eine Windkraftanlage nach Anspruch 1, **dadurch gekennzeichnet, dass** der Aktuator (24) durch den elektromagnetischen Typ gekennzeichnet ist.

5. Eine Windkraftanlage nach Anspruch 1, **dadurch gekennzeichnet, dass** der Aktuator (24) durch einen charakteristischen, linearen Schraubenantrieb-Typ gekennzeichnet ist.

## Revendications

1. Centrale éolienne avec rotor de type carrousel à axe de rotation vertical, ajusté à une structure de support et générateur actionné par un rotor installé sur la structure de support, le rotor étant équipé d'un arbre de transmission à trois bras, situé en bas sur un palier au centre symétrique de l'axe de rotation vertical et couplé cinématiquement à un générateur et comprenant trois pales identiques dont les tourillons inférieurs sont situés sur des paliers placés quant à eux aux extrémités des bras d'entraînement d'une structure de fixation à trois bras installée sur la structure de transmission et située sur un palier au centre symétrique de l'axe de rotation vertical de la structure de rotor ; les pales sont reliées par le biais de paliers de position ratio 1 : 2 aux engrenages centraux, lesquels sont fixés coaxialement par rapport à l'axe de rotation du rotor et dont la position angulaire, en relation avec la structure d'entraînement, détermine les mécanismes de réglage du rotor par rapport à la direction du vent, **caractérisé en ce que** chacun des engrenages du système central (15), (16), (17) du rotor est ajusté à l'aide d'un manchon (19), (20), (21) ; les manchons (19), (20); (21) sont rotatifs les uns par rapport aux autres et par rapport à la structure de support ; chaque manchon (19), (20), (21) a un chemin de cames (A), (B), (C) situé aux côtés opposés des surfaces de glissement, à travers lesquelles un tourillon (22) commun à tous les manchons (19), (20), (21) passe radialement pour déterminer la position angulaire des manchons (19), (20), (21) en relation avec la structure de support, où les cames (A) du premier manchon (19) du premier engrenage central (15) sont axés sur l'axe de rotation du rotor ; les cames (B) du second manchon (20) du second engrenage central (16) sont placés en oblique (droite ou gauche) par rapport à l'axe de rotation du rotor ; les cames (C) du troisième manchon (21) sur le troisième engrenage central (17) sont placés en oblique dans la direction opposée à celle des cames (B) du second manchon (20) ; celle du tourillon (22) est elle fixée à une tige-poussoir (23) reliée au minimum à un actionneur (24) ; cet actionneur (24) est fixé sur la structure de support et entraîne le tourillon (22) via une tige-poussoir (23), axialement dans les cames (A), (B), (C) du système de manchons (19), (20), (21), maintenant la position angulaire du tourillon (22) et forçant une rotation relative des second (20) et troisième (21) manchons par rapport au premier manchon (19) tout en maintenant la position angulaire du premier manchon (19) par rapport à la structure de support.

2. Centrale éolienne selon la revendication 1, **caractérisée en ce que** la tige-poussoir (23) anime le tourillon (22) d'une extrémité du chemin de cames (A), (B), (C) à l'autre, force la rotation du second manchon (20) correspondant au second engrenage central (16) et le troisième manchon (21) correspondant au troisième engrenage central (17) de telle manière que le palier de position modifie la position angulaire de deux pales de rotor (7) pa rapport à la pale (7) demeurant dans la position antérieure, de la position de travail à la position de repos, dans laquelle toutes les pales (7) eu égard à la pression exercée par le vent, vont faire fonction de ballast.

3. Centrale éolienne selon la revendication 1, **caractérisée en ce que** l'actionneur (24) est contrôlée en fonction de la vitesse du rotor.

4. Centrale éolienne selon la revendication 1, **caractérisée en ce que** l'actionneur (23) est de type électromagnétique.

5. Centrale éolienne selon la revendication 1, **caractérisée en ce que** l'actionneur (24) est de type transmission par vis plate.
